# EUROPEAN PATENT APPLICATION

(11) **EP 4 472 287 A1**
(43) Date of publication of application: **04.12.2024**
(21) Application number: 23305848.6
(22) Date of filing: 30.05.2023
(51) Int. Cl.: H04W 36/30, H04W 36/00, H04W 84/20, H04W 84/18

(54) **WIRELESS COMMUNICATION METHOD AND SYSTEM**

(71) Applicant: NXP USA, Inc., Austin TX 78735 (US)
(72) Inventor: Zhang, Yufeng, 31023 Toulouse (FR); Yeung, Robert, 31023 Toulouse (FR); Lefebvre, Damien, 31023 Toulouse (FR); De Brito Rangel Neto, Humberto, 31023 Toulouse (FR)
(74) Representative: Miles, John Richard

(57) **Abstract**

A method of wireless communication includes configuring a first wireless communication device as a central and a second wireless communication device as a peripheral or vice versa. The first wireless communication device includes a number of controllers (transceivers). The method further includes forming an active link between the second wireless communication device and the first wireless communication device via a first controller. During each connection interval of a measurement period, the method further includes the steps of (i) transmitting only one data packet via the first controller for a central device or suspending transmission from the first controller for a peripheral, (ii) determining a first received signal quality from a data packet received via the first controller, (iii) receiving one data packet (central) or two data packets (peripheral) at a second controller, and (iv) determining a second received signal quality from the last received data packet at the second controller.

## Description

### FIELD

This disclosure relates to a wireless communication method for and apparatus for a half-duplex wireless communication system such as a Bluetooth Low Energy (BLE) system.

### BACKGROUND

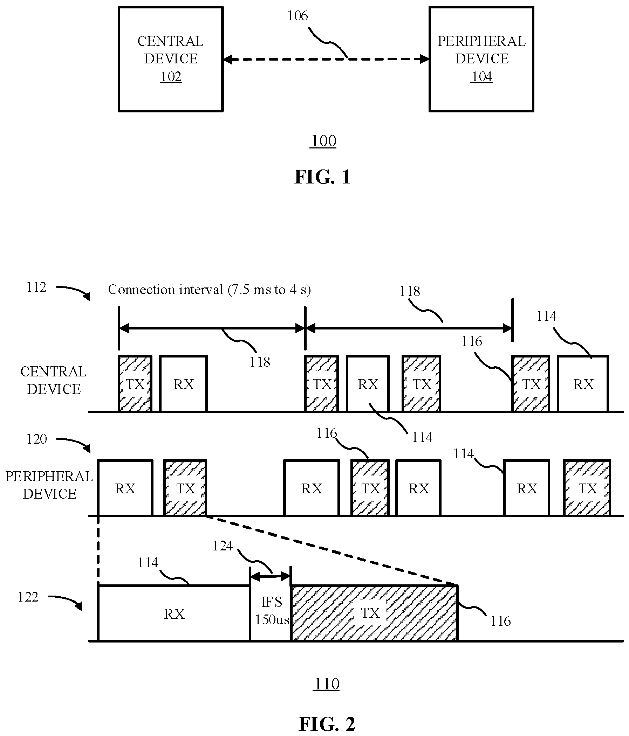

In Bluetooth Low Energy (BLE) technology, the connection between two devices is implemented using wireless radio frequency (RF) half-duplex communication. The exchanges between the devices are carried out at a fixed connection interval which may range from 7.5 milliseconds to 4 seconds. Figure 1 shows an example BLE system 100 including a central device 102 and peripheral device 104. An active wireless link 106 which may also be referred to as a communication channel is formed between the two devices. Figure 2 shows an example of BLE packet communication 110 of the BLE system 100 showing the central device packet communication 112, and peripheral device packet communication 120. Timing waveform 122 shows an expanded view of a portion of peripheral device packet communication 120. Transmit packets 116 and receive packets 114 occur during the connection intervals 118. The central device 102 initiates the data exchange at the beginning of the communication interval 118. The peripheral device monitors the wireless communication channel 106. Once the packet from the central device 102 is received, the peripheral device 104 waits for 150 microseconds (us) corresponding to the defined Inter Frame Space (IFS) 124 after the end of the packet and sends its own transmit packet 116. The central device 102 may then send a second transmit packet 116 150us after the packet from the peripheral device 104. Similarly, the peripheral device 104 may then transmit a second transmit packet 116 150us after receiving a packet 114 from the central device 104. The data exchange stops if the devices have no more data to send until the next connection interval.

### SUMMARY

Aspects of the disclosure are defined in the accompanying claims. In a first aspect there is defined a method for a half-duplex wireless communication system comprising a first wireless communication device including a router coupled to a plurality of controllers, each controller including an RF transceiver, the method comprising: configuring the first wireless communication device as a central device and a second wireless communication device as a peripheral device; forming an active link between the second wireless communication device and the first wireless communication device via a first controller of the plurality of controllers; during each connection interval of a measurement period: transmitting only one data packet via the first controller; determining a first received signal quality from a data packet received via the first controller; receiving two data packets via a second controller of the plurality of controllers; and determining a second received signal quality from the second of the two received data packets.

In some embodiments, the second of the two data packets received at the second controller is transmitted by the second wireless communication device. In some embodiments, the method further comprises, during each connection interval of a measurement period: receiving two data packets at a third controller of the plurality of controllers; and determining a third received signal quality from the second of the two received data packets; wherein the second of the two data packets received at the third controller is transmitted by the second wireless communication device.

In a second aspect there is defined a method for a half-duplex wireless communication system comprising a first wireless communication device including a router coupled to a plurality of controllers, the method comprising: configuring the first wireless communication device as a peripheral device and a second wireless communication device as a central device; forming an active link between the second wireless communication device and the first wireless communication device via a first controller of the plurality of controllers; during each connection interval of a measurement period: suspending data packet transmission via the first controller; determining a first received signal quality from a data packet received via the first controller; and determining a second received signal quality from a data packet received via a second controller of the plurality of controllers. In some embodiments, the data packet received via the second controller is transmitted by the second wireless communication device.

In some embodiments, the method further comprises, during each connection interval of a measurement period: receiving a data packet at a third controller of the plurality of controllers; determining a third received signal quality from the received data packet; wherein the data packet received at the third controller is transmitted by the second wireless communication device. In some embodiments, the method further comprises: handing over the active link from the first controller to the second controller dependent on the first received signal quality and the second received signal quality. In some embodiments, handing over the active link further comprises: retrieving a controller context from the first controller; providing the controller context to the second controller; and requesting that the second controller is configured as the active controller.

In some embodiments, determining the first received signal quality and the second received signal quality further comprises determining a first received signal strength and a second received signal strength, and wherein the method further comprises: transferring the active link to the second controller in response to the first received signal strength being less than the second received signal strength.

In some embodiments, the method further comprises : handing over the active link from the first controller to one of the second controller and the third controller dependent on the first received signal quality, the second received signal quality and the third received signal quality.

In some embodiments, the method further comprises : monitoring a signal quality of a signal received via the first controller; and initiating the measurement period dependent on the signal quality.

In some embodiments, the first wireless communication device and the second wireless communication are configured as Bluetooth Low Energy (BLE) devices, and the plurality of controllers are configured as BLE controllers.

In a third aspect, there is defined a half-duplex wireless communication device configured as a central device and comprising a router coupled to a plurality of controllers, each controller comprising an RF transceiver, the device configured to: wirelessly communicate via an active link to a further half-duplex wireless communication device configured as a peripheral device with a first controller of the plurality of controllers; wherein during each connection interval of a measurement period, the router is configured to: control the first controller to transmit only one data packet; determine a first received signal quality from a data packet received via the first controller; receive two data packets at a second controller of the plurality of controllers; and determine a second received signal quality from the second of the two received data packets.

In some embodiments, a second packet of the two data packets received at the second controller is transmitted by the further half-duplex wireless communication device.

In a fourth aspect, there is defined a half-duplex wireless communication device configured as a peripheral device and comprising a router coupled to a plurality of controllers, the device configured to: wirelessly communicate via an active link to a further half-duplex wireless communication device configured as a peripheral device with a first controller of the plurality of controllers; during each connection interval of a measurement period, the router is configured to: suspend data packet transmission via the first controller; determine a first received signal quality from a data packet received via the first controller; and determine a second received signal quality from a data packet received via a second controller of the plurality of controllers. In some embodiments, the data packet received via the second controller is transmitted by the further half-duplex wireless communication device.

In some embodiments, the device is configured as a Bluetooth Low-Energy (BLE) device, wherein the plurality of controllers comprise BLE transceivers, and wherein the further half-duplex wireless communication device is configured as a BLE device.

In some embodiments, the router is further configured to : hand over the active link from the first controller to the second controller dependent on the first received signal quality and the second received signal quality.

In some embodiments, the router is further configured to hand over the active link by: retrieving a controller context from the first controller ; providing the controller context to the second controller; and requesting that the second controller is configured as the active controller.

In some embodiments, the router is further configured to determine the first received signal quality and the second received signal quality by: determining a first received signal strength and a second received signal strength, and wherein the router is further configured to transfer the active link to the second controller in response to the first received signal strength being less that the second received signal strength.

In some embodiments, the router is further configured to monitor a signal quality of a signal received via the first controller; and initiate the measurement period dependent on the signal quality of the first controller.

### BRIEF DESCRIPTION OF THE DRAWINGS

In the figures and description like reference numerals refer to like features. Embodiments are now described in detail, by way of example only, illustrated by the accompanying drawings in which:
Figure 1 shows a known Bluetooth Low-Energy (BLE) system.
Figure 2 illustrates an example of BLE packet communication of the BLE system of figure 1.
Figure 3 shows a Bluetooth Low-Energy (BLE) system including a peripheral device with multiple controllers.
Figure 4 shows a Bluetooth Low-Energy (BLE) system including a mobile device and a car with a BLE device including multiple controllers.
Figure 5 shows data packet timing illustrating window widening.
Figure 6 shows an example of BLE packet communication side effect of the window widening.
Figure 7 shows a BLE system according to an embodiment.
Figure 8 illustrates the data packet timing of the BLE system of figure 7.
Figure 9 shows a method of operating a BLE system according to an embodiment.
Figure 10 shows a BLE system according to an embodiment.
Figure 11 shows the data packet timing of the BLE system of figure 10.
Figure 12 shows a method of operating a BLE system according to an embodiment.
Figure 13 shows a method of handing over an active link in a BLE system according to an embodiment.

It should be noted that the figures are diagrammatic and not drawn to scale. Relative dimensions and proportions of parts of these figures have been shown exaggerated or reduced in size, for the sake of clarity and convenience in the drawings. The same reference signs are generally used to refer to corresponding or similar features in modified and different embodiments. Some steps illustrated in flow diagrams may be carried out in a different order than illustrated and/or in parallel.

### DETAILED DESCRIPTION OF EMBODIMENTS

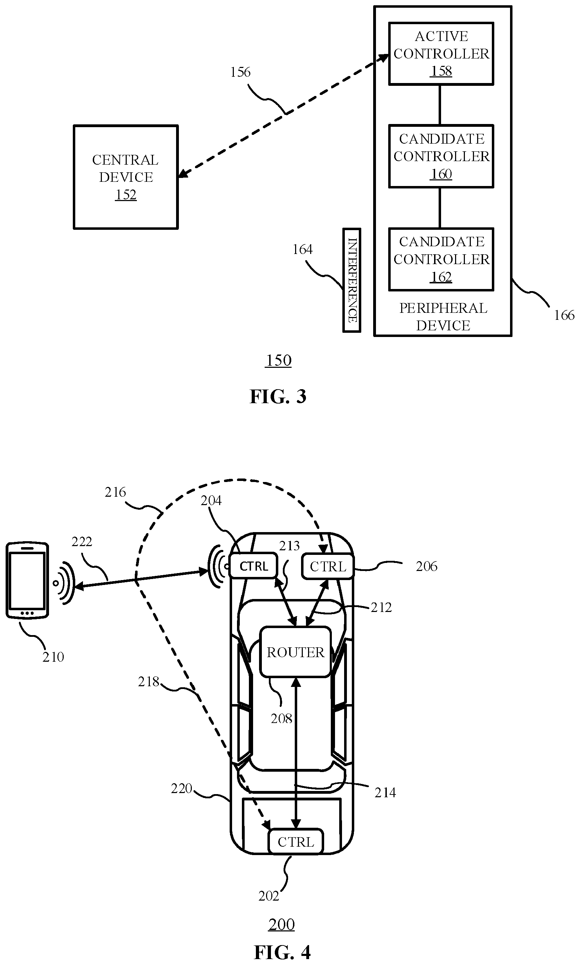

Figure 3 illustrates an example BLE system 150 including a central device 152 and a peripheral device 166 including multiple controllers 158, 160, 162 which may also be referred to as radio controllers. The controllers 158, 160, 162 may each include a BLE transceiver. In many scenarios, the central or peripheral devices can be moved by the user and undergo radio interference 164. In such cases, the link 156 between the central device 152 and the peripheral device 166 can become unreliable. To make the system more robust against external interferences, the multiple controllers can be placed at different locations. One controller, for example controller 158, is active and communicates with the central device 152. One or more of the other controllers, for example controller 160, 162, are designated as a candidate controller which may monitor the link 156. Dependent on the signal quality of the link 156 between the central device 152 and the active controller 158, the link 156 may be handed over from the active controller 158 to one of the candidate controllers 160, 162.

Figure 4 shows a BLE communication system 200 including a mobile device 210 and a car 220 including a router 208 connected to fixed controllers which may also be referred to as anchors 202, 204, 206 by respective connections 214, 213, 212. Each controller 202, 204, 206 includes a BLE transceiver. The mobile device 210 is connected via wireless link or active connection 222 to one of the controllers, for example controller 204, inside the car 220. The connected controller is denoted as the active controller. The other controllers, for example controllers 202, 206 are candidate controllers which monitor the active connection 222, shown by dashed lines 218 and 216 for controllers 202, 206 respectively. If one candidate controller can establish a better quality link with the mobile device 210, the connection may be handed over from the current active controller to the better candidate controller. The mobile device 210 can be a central device or a peripheral device. The active controller can be the peripheral and referred to as the peripheral controller or the central and referred to as central controller, respectively.

A candidate controller that monitors a link may be understood as a controller that captures packets sent by the active peer device. The candidate controller then assesses the quality of the signal received. The quality of the signal indicates if the candidate controller receiver is better for maintaining a connection with the peer device compared with the other controllers.

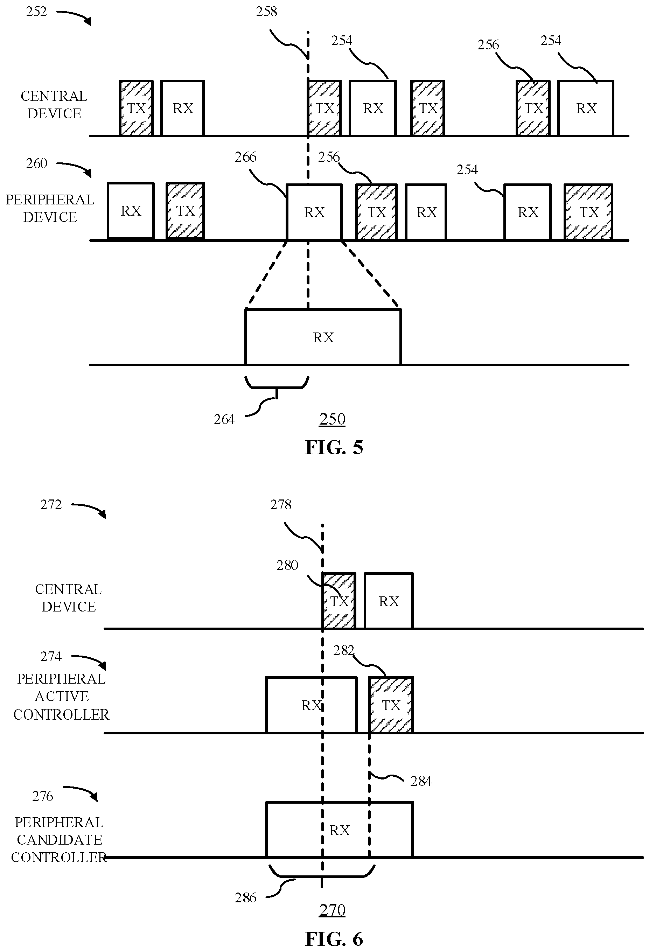

Figure 5 shows data packet timing 250 for receive packets 254 and transmit packets 256 illustrating window widening. Timing waveform 252 shows the central device, timing waveform 260 shows the timing for a peripheral device. The BLE (Bluetooth Low Energy) devices usually use relatively low-cost crystals as a timer to generate the connection interval. The clock drift can reach 500ppm. For the 4 second connection interval case, the clock drift can be 4000ms*500/1000000 = 2ms for each device. Furthermore, the two device's clocks can drift in opposite directions. Thus, the peripheral must widen its reception windows 264 by 4ms before and 4ms after the theoretical starting point 258 of the connection interval. The window widening stops as soon as the start of the packet 266 is received. To monitor an active link, the candidate controller must receive the packets on the expected channel.

If the candidate controller is in a central device, then it monitors the packets from the peripheral device. If the candidate controller is in a peripheral, then it needs to monitor the packets from the central device. If there is no packet loss, the candidate controller will be capable of capturing all the packets and determine which packets belongs to the central and which ones belong to the peripheral. However, this not always the case as illustrated in figure 6 showing an example of BLE packet communication 270. Timing waveform 272 shows the central device, timing waveform 274 shows the timing for the peripheral active controller and timing waveform 276 shows the timing for a peripheral candidate controller. In this example, the candidate receive window 286 is widened before and after the expected start 278 of the connection interval. If the central transmit packet 280 is not detected but the peripheral device transmit packet 282 is detected, as the transmit packet start 284 of packet 282 falls into the widened receive window 286, the candidate controller erroneously interprets the peripheral device transmit packet 282 as the central device packet. In general, if one of the packets of the connection interval is not detected, the candidate controller will not be able to determine with certainty the packet sender, as there is no information in the packet indicating its sender and the minimum packet length is 80us. If there is a misidentification of the origin of the monitored packets, the candidate controller will provide incorrect link quality measurement and make an incorrect, unexpected handover decision.

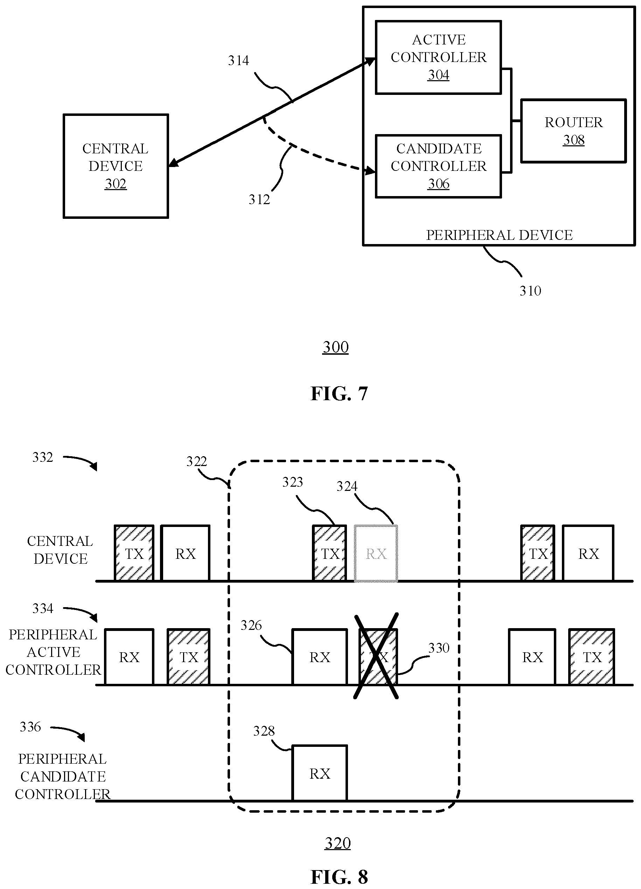

Figure 7 shows a BLE system 300 according to an embodiment. A first device 302 is configured as central device, and a second device 310 is configured as a peripheral device including a first controller 304 which as illustrated is the active controller and a second controller 306 which as illustrated is the candidate controller. The peripheral device 310 may include a number of BLE controllers which share the same BLE device ID which will be different to the central device BLE device ID. The first and second controllers each include a respective BLE transceiver. The controller 304, 306 are coupled to a router 308 via a wired or wireless connection. In some examples, the router 308 may be included in one of the controllers 304, 306. In other examples there may be additional controllers. The active controller 304 wirelessly communicates with the central device 302 via active link 314 and the candidate controller 306 monitors the active link 314 indicated by dashed line 312. The central device 302 initiates the transmission at each connection interval. The peripheral device 310 transmits a packet via the active controller 304 after receiving a packet from the central device 302. The active controller 304 of peripheral device 310 may report the signal quality to the router 308 based on the packets received from the central device 302. The candidate controller 306 monitors 312 the existing link 314 between the central device 302 and the peripheral device 310 upon request.

The router 308 may be implemented in hardware, software or a combination of hardware and software. The router 308 may be an independent physical device or additional software embedded in one of the controllers 304, 306. The router 308 may control the different controllers 304, 306 based on the handover criteria. The router 308 may check the signal quality reported by the active and candidate peripherals 304, 306. The router 308 may request the active peripheral controller 304 to suspend or resume the transmission and request the candidate controller 306 to start or stop the link monitoring and check if the handover criteria are satisfied based on different measurements. The router 308 may hand over the link 314 from the active controller 304 to the candidate controller 306. The router 308 typically is only for control, the payload data may not be sent to the router 308 but to the application level ( not shown) from the controllers 304, 306.

Figure 8 shows data packet timing 320 of the BLE system 300. Timing waveform 332 shows the timing for central device 302, timing waveform 334 shows the timing for peripheral active controller 304 and timing waveform 336 shows the timing for the peripheral candidate controller 306. The active peripheral controller 304 may monitor the signal quality for example by received signal strength indication (RSSI) or other suitable quality measure including but not limited to the link quality indicator (LQI), signal-to-noise ratio (SNR), packet error rate (PER), and number of retransmissions. Dependent on the measured signal quality, the router 308 may initiate a measurement period 322 including one or more connection intervals. The router 308 may enable monitoring of the link 314 by the candidate controller 306 during the measurement period. In each connection interval during the measurement period, the active peripheral 304 suspends transmission. The central device transmits a packet 323 which is received as receive packet 326 by the active peripheral 304 and receive packet 328 by candidate peripheral 306. Since subsequent transmission packet 330 is not sent, the central device 302 does not receive the corresponding receive packet 324 and no further transmission occurs within the connection interval. Thus, only the packet from the central device 302 can be received by the peripheral candidate controller 306 and the sender is determined without ambiguity. Both the active controller and the candidate controller report the measurements of packet sent by the central to the router 308. If the handover criteria are satisfied, the handover is performed between the controllers 304, 306.

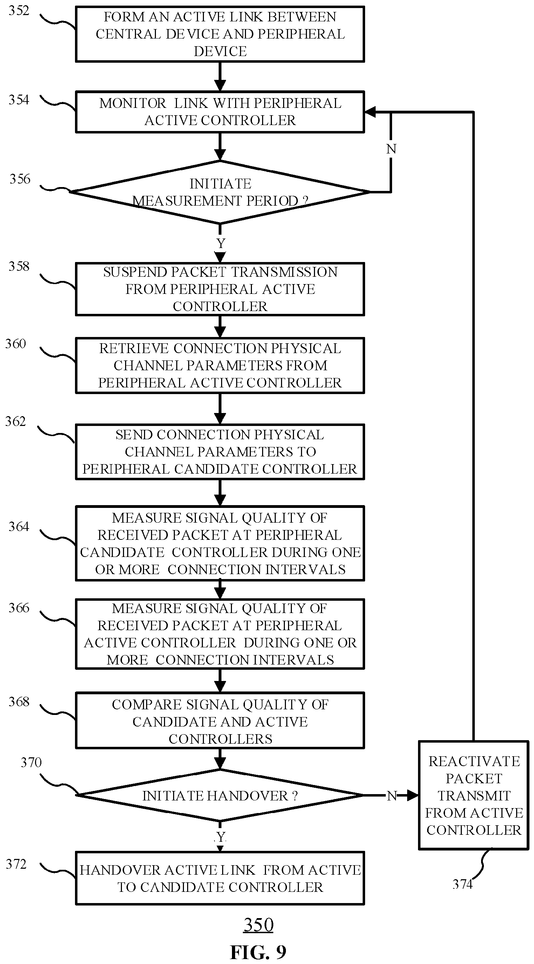

Figure 9 shows a method 350 of operating a BLE system, such as for example BLE system 150, 300 or BLE system 200 if the mobile device 210 is configured as a central device. In step 352 an active link may be formed between the central device and peripheral. In step 354, the link may be monitored by the active peripheral which measures the signal quality. In step 356, a check may be made to determine whether to initiate a measurement period dependent on the signal quality. If the signal quality at the active peripheral is above a certain threshold, i.e. acceptable quality, then the method returns to step 354. Otherwise the method proceeds to step 358 and the packet transmission from the active peripheral is suspended. In step 360 the connection physical channel parameters such as timing, channel mapping, hop, access address, and connection interval may be retrieved from the peripheral active controller. In step 362 the connection physical channel parameters may be sent to the peripheral candidate controller. In step 364 the signal quality of the received packed is measured by the candidate peripheral during one or more connection intervals. In step 366, the signal quality of the received packet is measured by the active controller during one or more connection intervals. In step 368, signal quality of the candidate controller may be compared and the handover decision may be made in step 370, for example if the difference between the signal quality at the candidate peripheral controller and the active peripheral controller is greater than a certain threshold value then the active link may be handed over. If no handover follows, in step 374 the packet transmission from the active controller may resume. Otherwise in step 372, the active link is handed over from active peripheral controller to the candidate peripheral controller. In this case, the roles are swapped and so the candidate controller becomes the active controller and vice versa.

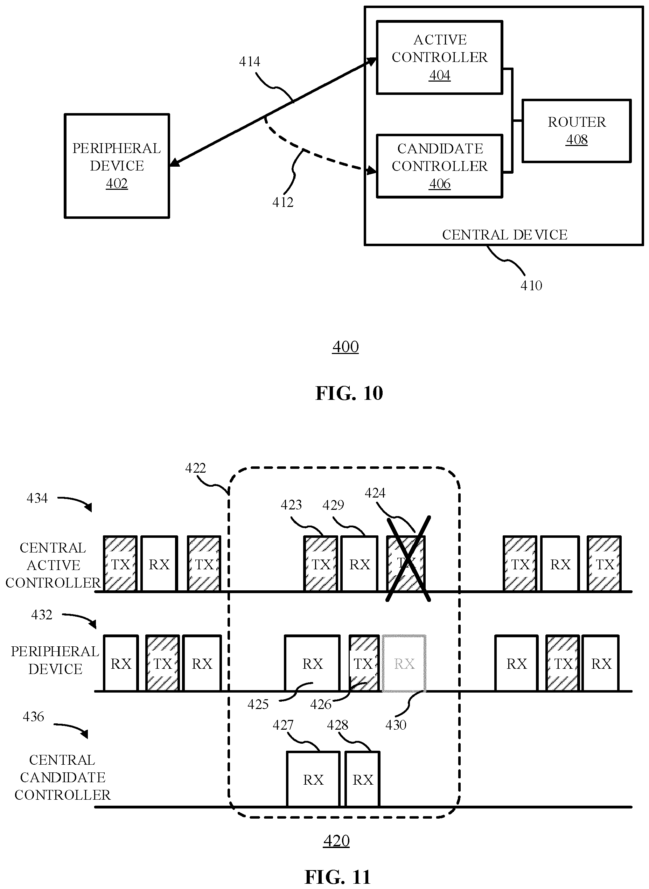

Figure 10 shows a BLE system 400 according to an embodiment with a first device 402 configured as a peripheral device, and a second device 410 configured as a central device including a first controller 404 which as illustrated is the active controller and a second controller 406 which as illustrated is the candidate controller. The central device 410 may include a number of BLE controllers which may share the same BLE device ID which will be different to the peripheral device BLE device ID. The first and second controllers 404, 406 each include a respective BLE transceiver. The controllers 404, 406 are coupled to a router 408 via a wired or wireless connection. In some examples, the router 408 may be included in one of the controllers 404, 406. In other examples, there may be additional controllers. The active controller 404 wirelessly communicates with the peripheral device 402 via active link 414 and the candidate controller 406 monitors the active link 414 indicated by dashed line 412 similar to BLE system 300. The router 408 performs a similar function to router 308 and may be implemented in hardware in the same device or an independent physical device, or implemented in software embedded in one of the controllers 404, 406, or implemented as a combination of hardware and software in one or more physical devices.

Figure 11 shows data packet timing 420 of the BLE system 400. Timing waveform 432 shows the timing for peripheral device 402, timing waveform 434 shows the timing for central active controller 404 and timing waveform 436 shows the timing for the central candidate controller 406. The active central controller 404 may monitor the signal quality for example by received signal strength indication or other suitable quality measure. Dependent on the measured signal quality, the router 408 may initiate a measurement period 422 including one or more connection intervals. The router 408 may enable monitoring of the link 414 by the candidate controller 406 during the measurement period 422. In each connection interval during the measurement period the active central controller 404 transmits only one packet 423 which is received as receive packet 425 by the peripheral 402 and receive packet 427 by candidate central controller 406. The peripheral then transmits packet 426 which is received as receive packet 429 by the active central controller and receive packet 428 by candidate central controller 406. Since the subsequent transmission packet 424 is not sent, the peripheral device 402 does not receive the corresponding receive packet 430 and no further transmission from the central occurs within the connection interval. Thus, the second packet 428 is always from the peripheral device 402. Both the active controller and the candidate controller report the measurements of packet sent by the peripheral 402 to the router 408. If the handover criteria are satisfied, the handover is performed between the controllers 404, 406.

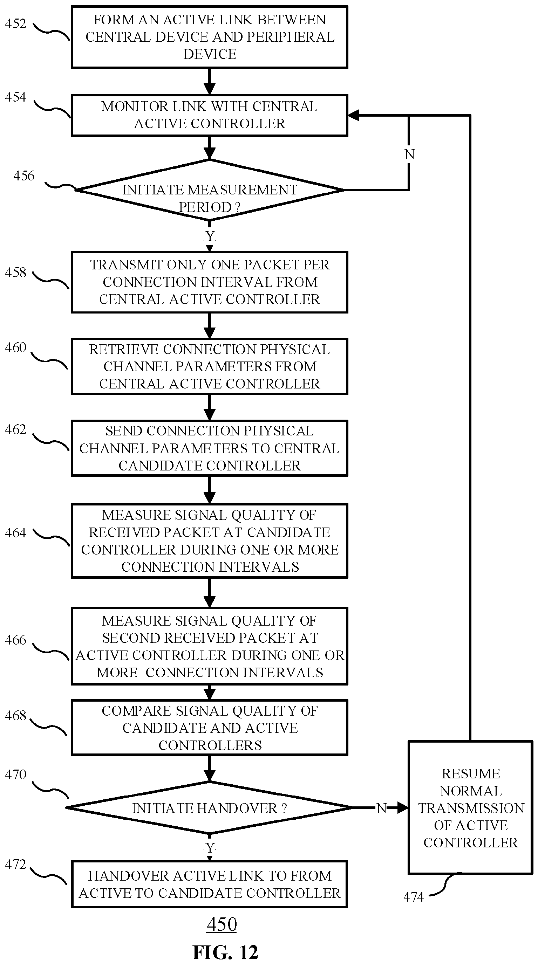

Figure 12 shows a method of operating a BLE system 450, such as for example BLE system 400 or BLE system 200 if the mobile device 210 is configured as a peripheral device. In step 452 an active link may be formed between the central device and peripheral. In step 454, the link may be monitored by the active central controller which measures the signal quality. In step 456, a check may be made to determine whether to initiate a measurement period dependent on the signal quality. If the signal quality at the active central is above a certain threshold, i.e. acceptable quality, then the method returns to step 454. Otherwise the method proceeds to step 458 and the packet transmission from the active central is limited to one transmission per connection interval. In step 460, the physical channel parameters are retrieved from the central active controller. In step 462, the physical channel parameters are sent to the central candidate controller. In step 464, the signal quality of the received packed is measured by the candidate central during one or more connection intervals. In step 466, the signal quality of the received packet is measured by the active controller during one or more connection intervals. In step 468, the signal quality of the second received packet by the candidate controller may be compared and the handover decision may be made in step 470. For example, if the difference between the signal quality at the candidate central controller and the active central controller is greater than a certain threshold value then the active link may be handed over. If no handover follows, in step 474 which may correspond to the end of the measurement period, the normal packet transmission from the active controller may resume i.e. not restricted to one packet per connection interval. If a handover decision is made in step 470, then in step 472, the active link may be handed over from the active central controller to the candidate central controller. In this case, the roles are swapped and so the candidate controller becomes the active controller and vice versa.

Embodiments described herein may allow the candidate controllers to reliably monitor the link without mistaking the central and the peripheral. For a handover implemented on the peripheral side, the central is not aware of the handover. Therefore, the central does not need any special support for this feature. The same is valid for the peripheral device if the handover is executed on central side.

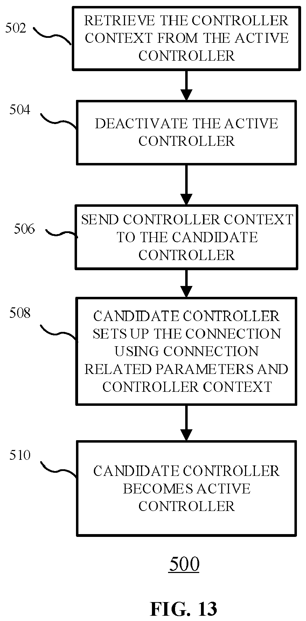

Figure 13 shows a method of handing over a connection from an active controller to a candidate controller 500 which may be implemented in any of the BLE systems 150, 200, 300, 400. The handover may be decided using methods such as methods 350, 450. In step 502, a router, for example router 208, 308, 408 retrieves the controller context such as peer negotiation outcomes, peer capability, encryption parameters from the active controller. In step 504 the active controller is deactivated. In step 506, The router sends the context to the selected candidate controller. In step 508, The candidate controller sets up the connection based on the controller related connection parameters and the controller context. The connection parameters are sent before the measurement starts and they are related to the physical channel. The controller context is everything else such as: encryption keys, encryption parameters, peer negotiation results, local controller related configuration etc. In step 510, the candidate controller becomes the active controller.

The detailed embodiments illustrated and described relate to a BLE system. However, it will be appreciated that other embodiments may be implemented for any half-duplex wireless communication system having defined connection intervals and with one device including multiple controllers including RF transceivers communicating with a second device. The device including multiple controllers may use one of the controllers for active communication which may be referred to as the active controller. One or more of the remaining controllers which may be referred to as candidate controllers may be used to monitor the active connection.

A method of wireless communication includes configuring a first wireless communication device as a central and a second wireless communication device as a peripheral or vice versa. The first wireless communication device includes a number of controllers (transceivers). The method further includes forming an active link between the second wireless communication device and the first wireless communication device via a first controller. During each connection interval of a measurement period, the method further includes the steps of (i) transmitting only one data packet via the first controller for a central device or suspending transmission from the first controller for a peripheral, (ii) determining a first received signal quality from a data packet received via the first controller, (iii) receiving one data packet (central) or two data packets (peripheral) at a second controller, and (iv) determining a second received signal quality from the last received data packet at the second controller.

In some example embodiments the set of instructions/method steps described above are implemented as functional and software instructions embodied as a set of executable instructions which are effected on a computer or machine which is programmed with and controlled by said executable instructions. Such instructions are loaded for execution on a processor (such as one or more CPUs). The term processor includes microprocessors, microcontrollers, processor modules or subsystems (including one or more microprocessors or microcontrollers), or other control or computing devices. A processor can refer to a single component or to plural components.

In other examples, the set of instructions/methods illustrated herein and data and instructions associated therewith are stored in respective storage devices, which are implemented as one or more non-transient machine or computer-readable or computer-usable storage media or mediums. Such computer-readable or computer usable storage medium or media is (are) considered to be part of an article (or article of manufacture). An article or article of manufacture can refer to any manufactured single component or multiple components. The non-transient machine or computer usable media or mediums as defined herein excludes signals, but such media or mediums may be capable of receiving and processing information from signals and/or other transient mediums.

Example embodiments of the material discussed in this specification can be implemented in whole or in part through network, computer, or data based devices and/or services. These may include cloud, internet, intranet, mobile, desktop, processor, look-up table, microcontroller, consumer equipment, infrastructure, or other enabling devices and services. As may be used herein and in the claims, the following non-exclusive definitions are provided.

In one example, one or more instructions or steps discussed herein are automated. The terms automated or automatically (and like variations thereof) mean controlled operation of an apparatus, system, and/or process using computers and/or mechanical/electrical devices without the necessity of human intervention, observation, effort and/or decision.

Although the appended claims are directed to particular combinations of features, it should be understood that the scope of the disclosure of the present invention also includes any novel feature or any novel combination of features disclosed herein either explicitly or implicitly or any generalisation thereof, whether or not it relates to the same invention as presently claimed in any claim and whether or not it mitigates any or all of the same technical problems as does the present invention.

Features which are described in the context of separate embodiments may also be provided in combination in a single embodiment. Conversely, various features which are, for brevity, described in the context of a single embodiment, may also be provided separately or in any suitable sub combination.

The applicant hereby gives notice that new claims may be formulated to such features and/or combinations of such features during the prosecution of the present application or of any further application derived therefrom.

For the sake of completeness it is also stated that the term "comprising" does not exclude other elements or steps, the term "a" or "an" does not exclude a plurality, a single processor or other unit may fulfil the functions of several means recited in the claims and reference signs in the claims shall not be construed as limiting the scope of the claims.

## Claims

1. A method for a half-duplex wireless communication system comprising a first wireless communication device including a router coupled to a plurality of controllers, each controller including an RF transceiver, the method comprising:
configuring the first wireless communication device as a central device and a second wireless communication device as a peripheral device;
forming an active link between the second wireless communication device and the first wireless communication device via a first controller of the plurality of controllers;
during each connection interval of a measurement period:
transmitting only one data packet via the first controller;
determining a first received signal quality from a data packet received via the first controller;
receiving two data packets via a second controller of the plurality of controllers; and
determining a second received signal quality from the second of the two received data packets.

2. The method of claim 1, wherein the second of the two data packets received at the second controller is transmitted by the second wireless communication device.

3. The method of any of claims 1 or 2 further comprising, during each connection interval of a measurement period:
receiving two data packets at a third controller of the plurality of controllers; and
determining a third received signal quality from the second of the two received data packets;
wherein the second of the two data packets received at the third controller is transmitted by the second wireless communication device.

4. A method for a half-duplex wireless communication system comprising a first wireless communication device including a router coupled to a plurality of controllers, the method comprising:
configuring the first wireless communication device as a peripheral device and a second wireless communication device as a central device;
forming an active link between the second wireless communication device and the first wireless communication device via a first controller of the plurality of controllers;
during each connection interval of a measurement period:
suspending data packet transmission via the first controller;
determining a first received signal quality from a data packet received via the first controller; and
determining a second received signal quality from a data packet received via a second controller of the plurality of controllers.

5. The method of claim 4, wherein the data packet received via the second controller is transmitted by the second wireless communication device.

6. The method of any of claims 4 or 5 further comprising, during each connection interval of a measurement period:
receiving a data packet at a third controller of the plurality of controllers;
determining a third received signal quality from the received data packet;
wherein the data packet received at the third controller is transmitted by the second wireless communication device.

7. The method of any preceding claim, further comprising:
handing over the active link from the first controller to the second controller dependent on the first received signal quality and the second received signal quality.

8. The method of claim 7 wherein handing over the active link further comprises:
retrieving a controller context from the first controller ;
providing the controller context to the second controller; and
requesting that the second controller is configured is the active controller.

9. The method of claim 8, wherein determining the first received signal quality and the second received signal quality further comprises determining a first received signal strength and a second received signal strength, and wherein the method further comprises: transferring the active link to the second controller in response to the first received signal strength being less than the second received signal strength.

10. The method of any of claims 3 or 6, further comprising : handing over the active link from the first controller to one of the second controller and the third controller dependent on the first received signal quality, the second received signal quality and the third received signal quality.

11. The method of any preceding claim, further comprising:
monitoring a signal quality of a signal received via the first controller; and
initiating the measurement period dependent on the signal quality.

12. The method of any preceding claim, wherein the first wireless communication device and the second wireless communication are configured as Bluetooth Low Energy, BLE, devices, and wherein the plurality of controllers are configured as BLE controllers.

13. A half-duplex wireless communication device configured as a central device and comprising a router coupled to a plurality of controllers, each controller comprising an RF transceiver, the device configured to:
wirelessly communicate via an active link to a further half-duplex wireless communication device configured as a peripheral device with a first controller of the plurality of controllers;
wherein during each connection interval of a measurement period, the router is configured to:
control the first controller to transmit only one data packet;
determine a first received signal quality from a data packet received via the first controller;
receive two data packets at a second controller of the plurality of controllers; and
determine a second received signal quality from the second of the two received data packets.

14. The wireless communication device of claim 13, wherein a second packet of the two data packets received at the second controller is transmitted by the further half-duplex wireless communication device.

15. A half-duplex wireless communication device configured as a peripheral device and comprising a router coupled to a plurality of controllers, the device configured to:
wirelessly communicate via an active link to a further half-duplex wireless communication device configured as a peripheral device with a first controller of the plurality of controllers;
wherein during each connection interval of a measurement period, the router is configured to:
suspend data packet transmission via the first controller;
determine a first received signal quality from a data packet received via the first controller; and
determine a second received signal quality from a data packet received via a second controller of the plurality of controllers.
